(19) Europäisches Patentamt

European Patent Office

Office européen des brevets

(11) EP 1 009 086 A1

(12) **EUROPEAN PATENT APPLICATION**

(43) Date of publication:
14.06.2000 Bulletin 2000/24

(51) Int. Cl.7: **H02K 5/173**, F16C 33/30

(21) Application number: **99123544.1**

(22) Date of filing: **26.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.12.1998 JP 35101898**

(71) Applicant: **MINEBEA CO., LTD.**
**Kitasaku-gun, Nagano-ken (JP)**

(72) Inventors:
• **Obara, Rikuro,**
c/o Minebea Co., Ltd
**Miyota-Machi, Kitasaku-gun, Nagano-ken (JP)**
• **Yoshikawa, Hiroshi,**
c/o Minebea Co., Ltd
**Miyota-Machi, Kitasaku-gun, Nagano-ken (JP)**

(74) Representative:
**Patentanwälte**
**Schaad, Balass, Menzl & Partner AG**
**Dufourstrasse 101**
**Postfach**
**8034 Zürich (CH)**

(54) **Spindle motor**

(57) The spindle motor comprises at last one ball bearing formed by balls interposing between an inner ring and an outer ring in which said inner ring and outer ring are made of steel and said balls are made of ceramics and a pair of said ball bearings being provided between the spindle shaft and the rotor of the spindle motor.

FIG.1

EP 1 009 086 A1

**Description**

BACKGROUND OF THE INVENTION

1. Field of Invention

The present invention relates to an improvement on a spindle motor which is to be used or, for example, hard disk devices (hard disk units), video tape recorders (VTRs) and so on.

2. Background of Related Art

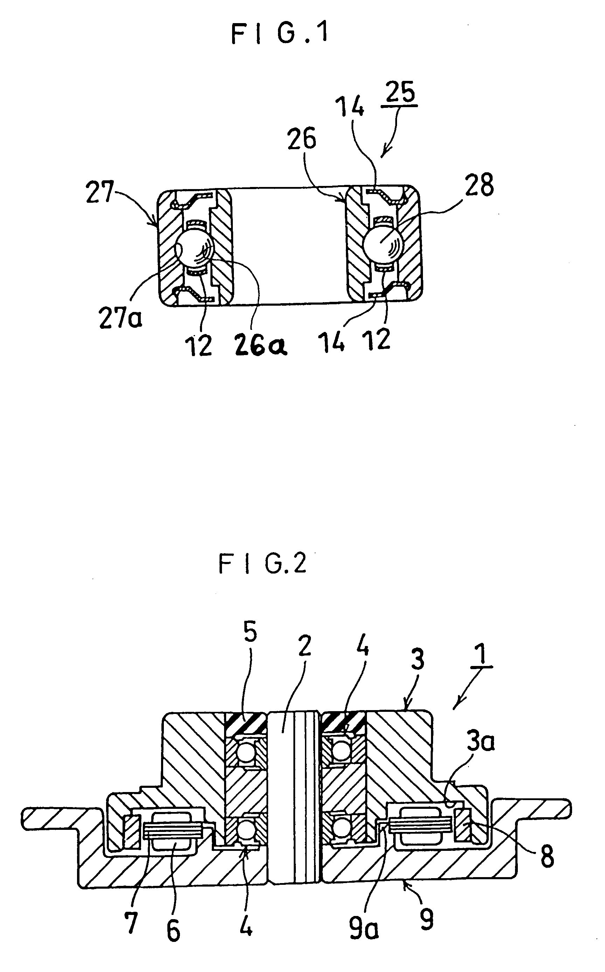

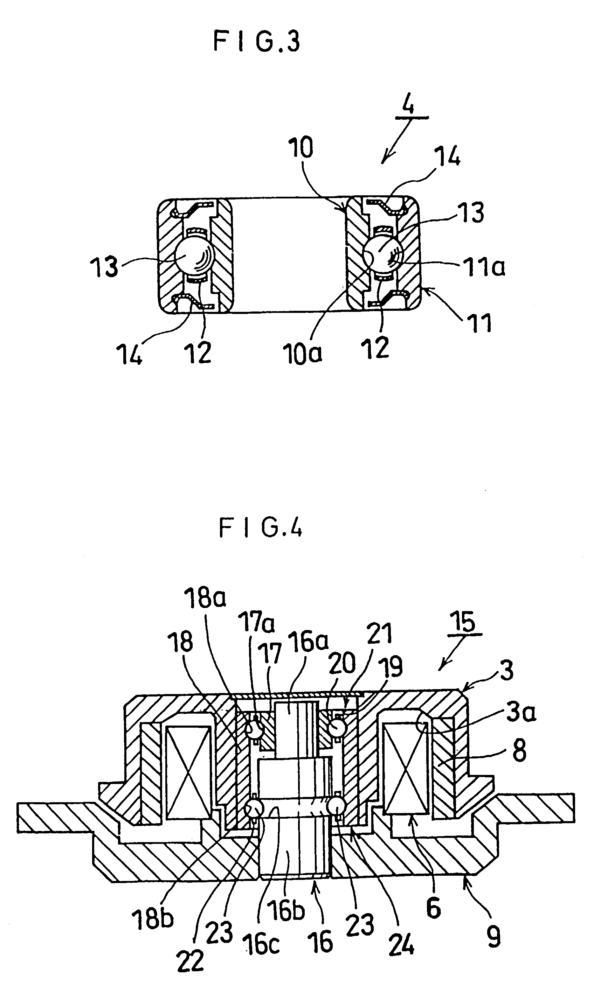

There are lot of appliances in which spindle motors are used, but as one of those appliances a miniaturized type of hard disk device assembled in a personal computer is assembled with a spindle motor having such a structure as shown in Fig. 2 and adapted to rotate at a high speed. This spindle motor 1 is arranged in such a manner as a pair of ball bearings 4 and 4 are interposed between an outer circumference of a spindle shaft 2 and an inner circumference surface of a rotor 3 sleeve-like and the rotor 3 is adapted to rotate at a high speed against the spindle shaft 2. On top of the upper located ball bearing 4 a seal material 5 is interposed between the spindle shaft 2 and the rotor 3 to prevent leaking of any dust and grease from the inside of the ball bearing 4 to the outside.
In a bottom portion of the rotor 3, a recessed portion 3a is formed to accommodate a stator 7 to be wound with a coil 6. On the inner circumference of the recessed portion 3a, a ring-like magnet 8 is mounted and kept off the stator 7 while facing it. On the lower end of the spindle shaft 2 a dish-like plate 9 is mounted by being coupled to support the stator 7 on a projection portion 9a provided on one part of the plate 9.
In the spindle motor 1 thus formed, the rotor 3 rotates at a high speed by intervening between a magnetic flux generated by an applied current supplied to the coil 6 from not shown controlling circuit and the lines of magnetic force of the magnet 8. The load due to this rotation is supported with the spindle shaft 2 through the pair of ball bearings 4, 4.
Ball bearings 4, mainly used in such a spindle motor are so called miniature ball bearings with a dimensional range of 4 to 6 mm on the inner diameter and 8 to 15 mm on the outer diameter.
This ball bearing 4 is constituted, as shown in Fig. 3, from an inner ring 10 having an inner ring raceway groove 10a on its outer circumference, an outer ring 11 having an outer ring raceway groove 11a and a plurality of balls 13 held in the position with a retainer 12 between the inner ring raceway groove 10a and the outer ring raceway groove 11a. The inner ring 10, the outer ring 11 and the ball 13 are made of a high carbon chromium steel (SUJ2 or equivalent) and the surface hardness (Rockwell hardness) of the inner ring raceway groove 10a, the outer ring raceway groove 11a and the ball 13 is approximately HRC62 respectively. Outside of the ball 13 a seal plate 14, 14 is provided to prevent a grease poured between the inner ring raceway groove 10a and the outer ring raceway groove 11a from being dispersed.
As a spindle motor for use of a hard disk device, other than the one shown in Fig. 2, but such a structure as shown in Fig. 4 is known. The spindle motor shown in Fig. 4 is provided with a stepped spindle shaft 16, consisting of a small diameter portion 16a and a large diameter portion 16b. And, to the small diameter portion 16a an inner ring 17 is fixed by coupling and gluing.
An upper ball bearing 21 is constituted with the inner ring 17, one cylindrical outer ring 18 disposed on its circumference portion and balls 20 interposed between those rings and held with a retainer 19. Therefore, on the outer circumference of the inner ring 17 an inner ring raceway groove 17a and on the inner circumference of the outer ring 18 two outer ring raceway grooves 18a, 18b are provided and one outer ring raceway groove 18a of the two outer ring raceway grooves faces to the inner ring raceway groove 17a.
On the outer circumference of the large diameter portion 16b of the spindle shaft 16, an annular inner ring raceway groove 16c is formed, and between the raceway groove 16c and the lower raceway groove 18b of the two outer ring raceway grooves 18a, 18b, the balls 23 held with a retainer 22 are interposed to form a lower ball bearing 24. On the circumference of the outer ring 18, a rotor 3 is coupled in an unitary manner. Since the other structures are not different from what are shown in Fig. 2, explanations thereof are omitted by attaching the same signs to these. Further, as to the operation where the rotor 3 rotates by being supplied with the current into the coil 6 of the stator 7, it is not different from what is shown in Fig. 2.
Recently, it is outstanding that the trend of miniaturization and high recording density of a hard disk device, and in particular that of the miniaturized hard disk device less than 3.5 inch has been greatly advanced and as to a hard disk device of 2.5 inch to be loaded on a portable note-book type of personal computer, although the thickness of the main body is small and the diameter of the disk is small, its memory capacity is required to the extent equivalent to 3.5 inch hard disk device, so that at present in the 2.5 inch hard disk device, the density of line and track recording has become higher to keep a high track density of 10KTPI to 14KTPI (TPI=track per inch).
Further, recently, the requirement to increase a transmission speed by increasing rotation speed of hard disk device of 3.5 inch and 2.5 inch has become great and, for instance, the 3.5 inch device has been used in such a high rotation speed as 5,400 to 7,200 r.p.m. and on some models the rotation speed is increasing to 10,000 r.p.m. and more.

Bearings assembled into such miniaturized hard disk devices are exposed to locally repeated stress on balls and raceway grooves of inner and outer ring creating coarse surface, which as a result causes increase of vibration and deterioration of noise property, shortening the service life. Therefore, in order to prevent the surfaces of raceway groove and ball from being damaged and worn, the inner and outer rings and the balls are made normally of high carbon chromium steel (SUJ2 or equivalent) and those surfaces are quenched in such a hardness as HRC 58 to 64. Further, in an equipment in which an anti-corrosion property is to be maintained, a martensite stainless steel (equivalent to SUS440C) is possibly used.

In the case where a spindle motor in which a bearing is assembled is transported, a spindle shaft is kept in the state where it does not rotate and under that situation if vibration is repeatedly added, a shock load is added to the surfaces of the ball, the inner and outer raceway grooves repeatedly. And in that situation, since a contact between the surfaces of the ball and the raceway groove becomes a contact where a metal contacts to another metal, so-called a metallic contact, an oil film by a grease will not be formed between them.

Thereby, between the balls and the surfaces of the raceway grooves, a repeated and fine sliding is generated to invite a local wearing, so-called fretting wearing. This fretting wearing is not preferable because it causes the vibration and acoustic property to be deteriorated. In order to prevent such fretting wearing, the use of grease showing high viscosity is effective, however, such a grease is not preferable because it invites the increase of rotation torque, energy consumption and heat generation of a motor due to the viscosity resistance.

In addition, since the rotation speed of the hard disk device has become great, the viscosity of the grease is apt to become easily low, so that, an oil film is hard to be formed at the contact portions made by the balls and raceway groove surfaces, and in addition there was a risk to create seizure due to the lack of the oil film. And, if an oil film is not formed at the contact portion between the balls and the raceway groove surfaces, a sliding phenomena is generated at the contact surface of the balls and the raceway grooves causing a local wearing and a surface coarsening.

By such a surface coarsening, there is a problem to invite not only a vibration increasing and a deterioration of the acoustic property but also a lowering of the life of the ball bearing. In particular, the vibration is not preferable because it influences badly against the vibration of the spindle motor and lowers the positioning precision of a magnetic head of the highly densified hard disk device.

The present invention relating to the herein mentioned spindle motor has been made considering aforementioned problems and the purpose is to provide a spindle motor not generating any seizing even under high rotation speed and reducing fretting friction for the improvement of the bearing service life. A further purpose is to provide a spindle motor which helps to achieve high recording density on the hard disk device.

SUMMARY OF THE INVENTION

The first aspect of the present invention is characterized in that, in a spindle motor which comprises a ball bearing which is formed by interposing balls between an inner ring and an outer ring and provided between a spindle shaft and a rotor, a pair of said ball bearings in which said inner ring and the outer ring are made of steel and said balls are made of ceramics are formed between the spindle shaft and the rotor.

The second aspect of the present invention is characterized in that, in a spindle motor which comprises a ball bearing which is formed by a cylindrical outer ring, a stepped spindle shaft having a large diameter portion on which an inner ring raceway groove is provided and a small diameter portion on which an inner ring is coupled and balls which are interposed between the outer ring and the inner ring raceway groove of the large diameter portion and between the outer ring and the inner ring on the small diameter portion of the spindle shaft which is interposed between the spindle shaft and the rotor, said stepped spindle motor shaft, the inner ring and the outer ring of the ball bearing are made of steel and the balls are made of ceramics.

The spindle motor structured as above mentioned has in common with spindle motors provided with conventional ball bearings in Fig. 3 that its rotor rotates by supplied current.

BRIEF DESCRIPTION OF THE DRAWINGS

Fig. 1 is a sectional view of the ball bearing of the present invention.

Fig. 2 is a sectional view of one conventional spindle motor for use of a hard disk device assembled with a conventional ball bearing.

Fig. 3 is a sectional view of the conventional ball bearing.

Fig. 4 is a sectional view of a conventional spindle motor for use of a hard disk device assembled with a conventional ball bearing.

## DETAILED DESCRIPTION OF PREFERRED EMBODIMENTS

Hereinafter, a manner of practice of the ball bearing of the present invention is explained referring to Fig. 1. A ball bearing of the present invention shown in Fig. 1 is what is used in a pair in a spindle motor shown in Fig. 2. Accordingly, as obvious if the ball bearing shown in Fig. 1 is compared with the conventional one shown in Fig. 2, the structure is not different with each other, however the nature of each member is made different to attain the improvement of the property and life of the ball bearing, and further of the spindle motor respectively.

The ball bearings 25 shown on Fig. 1 relating to the present invention consists of an inner ring 26 and outer ring 27 both made from high carbon chromium steel (SUJ2 or equivalent), and inner ring raceway groove 26a and outer ring raceway groove 27a surface hardness is approximately HRC62. Only the balls 28 are made from fine silicon nitride i.e. ceramics at a surface hardness of approximately HRC75. No alteration on Retainer and Seals. The ball bearing 25 will be provided as a pair, assembled into a spindle motor of a structure as in Fig. 2.

The present invention relates to a change of the nature of the material, so that the structure of the ball bearing 25 of the present invention is identical with conventional one as shown in Fig. 3. However, the various properties to be obtained by the spindle motor which are to be derived from the nature of the material of the present invention are superior to the conventional ones.

The table 1 shows a result of a comparative data obtained by comparing with the conventional ball bearing (shown in Fig. 3). In this comparing, the same amount of a grease is applied to each of the ball bearing 25 of the present invention and the ball bearing 4, and rotation speed of the spindle motor is set commonly to 5,400 r.p.m.. Then, with respect to the spindle motor 1 (SM), noise, axial non-rotation synchronization oscillation (NRRO), oscillation G value, current at the time of motor rotation (running current) and so on are measured.

Table 1

| Property of SM | SM assembled with ball bearing of the present invention | SM assembled with conventional ball bearing |
|---|---|---|
| Noise property (dB) | 28.5 | 29.3 |
| Oscillation G value (mG) | 13.15 | 17.23 |
| NRRO (μm) | 0.118 | 0.174 |
| Running current | 81.65 | 97.6 |

As shown in Table 1, the spindle motor 1 assembled with a pair of ball bearing of the present invention is lessened in each of the properties of the Noise property, NRRO, Oscillation G value and Running current compared with the spindle motor 1 assembled with a pair of conventional ball bearing 4 which comprises the balls of high carbon chromium steel, which enables the hard disk device to be increased highly in density, to save energy and to improve the acoustic property too.

A centrifugal force F working on the balls under the high speed rotation of the spindle motor is represented by the following equation,

$$F = M \cdot (dp/2) \cdot (\omega_m)^2$$

wherein M is the mass (Kg) of the ball, dp is the pitch circle diameter (m) of the ball, $\omega_m$ is the revolution angular velocity (rad/s).

In the high carbon chromium steel which is the material nature of the ball 13 in the spindle motor 1 assembled with the conventional ball bearing 4 the specific gravity was approximately 7.8, compared with that, the specific gravity of the silicon nitride which was the material for the balls 13 assembled in the ball bearing 25 assembled in the spindle motor 1 was 3.2, which is less than 1/2 and very small. Thereby, since the ball 13 is expected to be miniaturized and, as seen from the above equation, the centrifugal force of the ball 13 under the high rotation speed can be lessened, the load on the outer ring due to the centrifugal force can be reduced. Therefore, since any damage on the surface of the outer ring raceway groove is prevented and inertia of the ball 13 is reduced due to making the weight of the ball lighter, the starting torque of the spindle motor 1 is reduced to save an energy consumption of the spindle motor 1.

And, since the ball is formed by ceramics, wearing seizing and heat resistance is increased, so that baking at the time of initial lubrication is not generated and further, the lowering of the grease viscosity due to the heat generation of the ball bearing 25 under the high rotation speed prevents the seizing from being generated at the contact area of the raceway groove surface and the ball even if the lack of oil film is generated. Further, the life of the ball bearing 25 of the present invention has been confirmed to be improved than the conventional ball bearing 4.

In the ball bearing 25 shown in Fig. 1, seal plates 14 are mounted on both ends of the ball bearing 25, however such a structure is not limited to it, it is a matter of course to mount such seal plate, in the structure of the spindle motor 1 shown in Fig. 2, merely on the side where it is located outside of the ball bearing. Thus, if the structure is formed in such a manner as the seal plate 14 is mounted merely on one side, being the outside since an inside seal plate becomes not necessary, the number of the parts is reduced to lower the manufacturing cost.

Further, the ball bearing 25 of the present invention may be assembled in the spindle motor 15 having such structure as shown in Fig. 4. In that case, a stepped spindle shaft 16 and an inner ring 17 and an outer ring 18 of a ball bearing 21 are made of high carbon chromium steel (SUJ2 or equivalent) and a ball 28 is made of ceramics i.e. a fine silicon nitride, the surface hardness of which is approximately HRC75.

As to the spindle motor 15 having the above structure too, a comparative measurement with the conventional one as well as the previous measurement was conducted, and in that case too, as well as the result shown in Table 1, the spindle motor of the present invention was confirmed to become lessened in the noise property, the NRRO, the oscillation G value and the running current. For reference, the ball bearings 21 and 24 assembled in the spindle motor 15 shown in Fig. 4 are not provided with the seal plate, however these may be provided with them in order to prevent the grease from being dispersed.

In the embodiment explained above, although the ball 28 is formed from the fine silicon nitride, the present invention is not limited to this but it may be formed with any ceramics known as a fine ceramics such as fine alumina, zirconia or silicon carbide. Further, in the above embodiment, merely the ball 28 is made of ceramics but the inner ring and outer ring too may be made of ceramics.

As explained above, since the present invention is the spindle motor as having the structure in which the spindle motor is assembled with the ball bearing comprising the inner and outer rings made of steel and the ball made of ceramics, the coarsening of the surfaces of the inner and outer rings and the ball are difficult to occur, and since the centrifugal force of the spindle motor does not become large even if the spindle motor becomes a highly rotating one and the contacting load to the outer ring can be controlled, the spindle motor in which the acoustic property (noise property) and the oscillation property are improved, further an increase of the ball bearing life can be obtained.

## Claims

1. A spindle motor characterized in that, in a spindle motor which comprises a ball bearing formed by interposing balls between an inner ring and an outer ring and provided between a spindle shaft and a rotor, a pair of said ball bearings in which said inner ring and outer ring are made of steel and said balls are made of ceramics are provided between the spindle shaft and the rotor.

2. A spindle motor characterized in that, in a spindle motor which comprises a ball bearing formed by a cylindrical outer ring, a stepped spindle shaft having a large diameter portion on which an inner ring raceway groove is provided and a small diameter portion on which an inner ring is coupled and balls which are interposed between the outer ring and the inner ring raceway groove of the large diameter portion and interposed between the outer ring and the inner ring on the small diameter portion of the spindle shaft which is interposed between the spindle shaft and the rotor, said stepped spindle motor shaft, the inner ring and the outer ring of the ball bearing are made of steel and the balls are made of ceramics.

FIG.1

FIG.2

FIG.3

FIG.4

**European Patent Office**

## EUROPEAN SEARCH REPORT

Application Number

EP 99 12 3544

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1998, no. 04, 31 March 1998 (1998-03-31) & JP 09 329136 A (NIPPON SEIKO KK), 22 December 1997 (1997-12-22) | 1 | H02K5/173 F16C33/30 |
| Y | * abstract * | 2 | |
| Y | EP 0 613 134 A (MINEBEA KK) 31 August 1994 (1994-08-31) * figure 3 * | 2 | |
| X | PATENT ABSTRACTS OF JAPAN vol. 1995, no. 09, 31 October 1995 (1995-10-31) & JP 07 158642 A (KOYO SEIKO CO LTD), 20 June 1995 (1995-06-20) * abstract * | 1 | |
| X | PATENT ABSTRACTS OF JAPAN vol. 016, no. 465 (E-1270), 28 September 1992 (1992-09-28) & JP 04 165937 A (NTN CORP), 11 June 1992 (1992-06-11) * abstract * | 1 | TECHNICAL FIELDS SEARCHED (Int.Cl.7) H02K F16C |
| X | PATENT ABSTRACTS OF JAPAN vol. 014, no. 046 (M-0926), 26 January 1990 (1990-01-26) & JP 01 275914 A (ULVAC CORP), 6 November 1989 (1989-11-06) * abstract * | 1 | |

The present search report has been drawn up for all claims

| Place of search | Date of completion of the search | Examiner |
|---|---|---|
| THE HAGUE | 29 March 2000 | Zoukas, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 12 3544

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2000

| Patent document cited in search report | | Publication date | Patent family member(s) | Publication date |
|---|---|---|---|---|
| JP 09329136 | A | 22-12-1997 | NONE | |
| EP 0613134 | A | 31-08-1994 | JP 6251496 A | 09-09-1994 |
| JP 07158642 | A | 20-06-1995 | NONE | |
| JP 04165937 | A | 11-06-1992 | JP 2728181 B | 18-03-1998 |
| JP 01275914 | A | 06-11-1989 | NONE | |

EPO FORM P0459

For more details about this annex : see Official Journal of the European Patent Office, No. 12/82